# EUROPÄISCHE PATENTANMELDUNG

(11) **EP 4 257 272 A1**
(43) Veröffentlichungstag der Anmeldung: **11.10.2023**
(21) Anmeldenummer: 23164867.6
(22) Anmeldetag: 29.03.2023
(51) Int. Cl.: B23B 29/034, B23C 3/02, B23C 9/00, B23B 51/00

(54) **VORRICHTUNG ZUR FÜHRUNG UND AUSLENKUNG EINES BOHRFRÄSERS ZUR HERSTELLUNG EINES HINTERSCHNITTENEN BOHRLOCHS**

(30) Priorität: 05.04.2022 DE 102022108063
(71) Anmelder: fischerwerke GmbH & Co. KG, 72178 Waldachtal (DE)
(72) Erfinder: Schaffner, Maximilian, 72184 Eutingen (DE)
(74) Vertreter: Suchy, Ulrich Johannes

(57) **Zusammenfassung**

Die Erfindung betrifft eine Vorrichtung (1) zur Führung und Auslenkung eines Bohrfräsers (2) zur Herstellung eines hinterschnittenen Bohrlochs. Durch Drehung eines Exzenters (10) in einer Exzenteraufnahme (9) lässt sich der Bohrfräser (2) auslenken und durch Drehung der Exzenteraufnahme (9) mit ausgelenktem Bohrfräser (2) eine Hinterschneidung in dem Bohrloch herstellen. Eine Drehwinkelbegrenzung (24) begrenzt einen Drehwinkel des Exzenters (10) in der Exzenteraufnahme (9) derart, dass bei einem Drehantrieb des Exzenters (10) zunächst der Bohrfräser (2) ausgelenkt und anschließend die Exzenteraufnahme (9) mit dem Exzenter (10) gedreht wird.

## Beschreibung

Die Erfindung betrifft eine Vorrichtung zur Führung und Auslenkung eines Bohrfräsers zur Herstellung eines hinterschnittenen Bohrlochs mit den Merkmalen des Oberbegriffs des Anspruchs 1.

Hinterschnittene Bohrlöcher werden zu einer Verankerung eines in einer Hinterschneidung im Bohrloch aufspreizbaren Ankers erstellt, der die Hinterschneidung im Bohrloch hintergreift, wenn er aufgespreizt ist, und somit durch einen Formschluss an der Hinterschneidung gegen ein Herausziehen aus dem Bohrloch gehalten ist.

Die Offenlegungsschrift DE 39 17 603 A1 offenbart eine Vorrichtung zur Herstellung einer Hinterschneidung in einem Bohrloch. Die Vorrichtung weist eine Exzenterbüchse auf, die in einer Führungshülse drehbar gelagert ist, die wiederum in einem Gehäuse der Vorrichtung drehbar gelagert ist. Die Exzenterbüchse ist eine zylindrische Büchse mit einem exzentrischen Durchgangsloch, in dem ein zylindrischer Schaft eines Fräsers drehbar gelagert ist. Die Führungshülse ist eine ebenfalls zylindrische Hülse mit einem exzentrischen Durchgangsloch, in dem die Exzenterbüchse drehbar gelagert ist derart, dass durch eine Drehung der Exzenterbüchse in der Führungshülse der Schaft des Fräsers auf einem gedachten Kreisbogen aus einer zur Führungshülse koaxialen, nicht-ausgelenkten Stellung in eine zu der Führungshülse exzentrische ausgelenkte Stellung und umgekehrt bewegbar ist. Durch eine Drehung der Führungshülse im Gehäuse lässt sich in der ausgelenkten Stellung der Exzenterbüchse der Schaft des Fräsers auf einer Kreisbahn bewegen, wodurch bei einem Drehantrieb des Fräsers ein Fräskopf des Fräsers die Hinterschneidung in dem Bohrloch erzeugt. Drehachsen der Exzenterbüchse, der Führungshülse und des Schafts des Fräsers sind parallel zueinander, wobei in der nicht-ausgelenkten Stellung der Exzenterbüchse die Drehachse des Schafts des Fräsers mit der Drehachse der Führungshülse fluchtet.

Aufgabe der Erfindung ist, eine Vorrichtung zur Führung und Auslenkung eines Bohrfräsers zur Herstellung eines hinterschnittenen Bohrlochs vorzuschlagen, die einen gemeinsamen Antrieb zum Auslenken des Bohrfräsers und zu einer Kreisführung des Bohrfräsers zur Herstellung einer Hinterschneidung in dem Bohrloch aufweist.

Ein Bohrfräser ist ein Werkzeug mit einer oder mehreren Stirnschneiden zur Herstellung eines zylindrischen Bohrlochs durch Axialvorschub unter Drehantrieb des Werkzeugs und mit einer oder mehreren Umfangsschneiden zur Herstellung einer Hinterschneidung in dem Bohrloch bei einer Kreisführung unter Drehantrieb des Werkzeugs. Die Stirnschneiden können auch als Bohrschneiden und die Umfangsscheiden als Frässchneiden aufgefasst werden.

Die Aufgabe wird erfindungsgemäß durch die Merkmale des Anspruchs 1 gelöst. Die erfindungsgemäße Vorrichtung weist einen Exzenter mit einem Drehlager für einen Bohrfräserschaft eines Bohrfräsers auf. Mit dem Drehlager ist oder wird der Bohrfräser um eine Drehlagerachse des Drehlagers drehbar gelagert und vorzugsweise axial verschiebbar geführt. Die Drehlagerachse ist exzentrisch zu einer Exzenterachse, um die der Exzenter in oder an einer Exzenteraufnahme der erfindungsgemäßen Vorrichtung drehbar gelagert ist derart, dass durch eine Drehung des Exzenters um die Exzenterachse die Drehlagerachse in eine ausgelenkte Stellung verbringbar ist, in der die Drehlagerachse einen Abstand von einer Bohrachse aufweist, mit der die Drehlagerachse in einer nicht ausgelenkten Stellung fluchtet. Die Exzenteraufnahme ist um die zu der Exzenterachse exzentrische Bohrachse an oder in einem Grundteil der erfindungsgemäßen Vorrichtung drehbar gelagert derart, dass durch eine Drehung der Exzenteraufnahme um die Bohrachse das Drehlager für den Bohrfräserschaft auf einer Kreisbahn mit dem Radius des doppelten Abstandes der Drehlagerachse von der Bohrachse bewegt wird. Dadurch wird bei gleichzeitigem Drehantrieb des Bohrfräsers ohne axialen Vorschub der Hinterschnitt in dem Bohrloch hergestellt.

Die Drehlagerachse, die Exzenterachse und die Bohrachse sind insbesondere parallel zueinander. Die Bezeichnungen der Achsen werden zu ihrer Unterscheidung und zu ihrer eindeutigen Bezeichnung verwendet. Die Drehlagerachse ist die Achse, um die der Bohrfräserschaft drehbar an oder in dem Drehlager gelagert ist, die Exzenterachse ist die Achse, um die der Exzenter an oder in der Exzenteraufnahme drehbar gelagert ist, und die Bohrachse ist die Achse, um die die Exzenteraufnahme drehbar an oder in dem Grundteil der Vorrichtung gelagert ist. Die Bezeichnungen sind nicht einschränkend zu verstehen.

Zur Herstellung des hinterschnittenen Bohrlochs wird das Grundteil der Vorrichtung an einem Ankergrund oder dergleichen, in dem das Bohrloch erstellt werden soll, festgelegt. Der Exzenter wird in die nicht-ausgelenkte Bohrstellung gedreht, in der die Drehachse des Drehlagers mit der Bohrachse fluchtet. Wie beschrieben ist die Bohrachse die Achse, um die die Exzenteraufnahme an oder in dem Grundteil der Vorrichtung drehbar ist. Durch einen axialen Vorschub des Bohrfräsers in dem Drehlager gleichachsig mit der Drehlagerachse, die in der Bohrstellung mit der Bohrachse fluchtet, bei gleichzeitigem Drehantrieb des Bohrfräsers um die Drehlagerachse, wird zunächst ein zylindrisches Bohrloch koaxial zur Bohrachse in den Ankergrund gebohrt.

Dann wird der Bohrfräser ausgelenkt, indem der Exzenter um die Exzenterachse an oder in der Exzenteraufnahme gedreht wird, wodurch die Drehlagerachse in einen Abstand, der der Auslenkung entspricht, von der Bohrachse verbracht wird. Während des Auslenkens wird der Bohrfräser weiterhin drehend um die Drehlagerachse angetrieben. Mit dem ausgelenkten Bohrfräser wird die Exzenteraufnahme an oder in dem Grundteil der Vorrichtung, das an dem Ankergrund festgelegt ist, um die Bohrachse gedreht, wodurch das Drehlager mit dem Bohrfräser auf einem Kreis um die Bohrachse bewegt wird, wobei die Hinterschneidung in dem Bohrloch hergestellt wird. Der Bohrfräser wird dabei weiter drehend angetrieben. Die Exzenteraufnahme kann schon während des Auslenkens des Bohrfräsers oder auch erst, wenn der Bohrfräser (voll) ausgelenkt ist, um die Bohrachse gedreht werden. Um die Hinterschneidung auf einem vollen Umfang herzustellen, wird die Exzenteraufnahme mindestens einmal um 360° um die Bohrachse gedreht, wenn der Bohrfräser voll ausgelenkt ist.

Während der Herstellung der Hinterschneidung, das heißt während des Auslenkens des Bohrfräsers und während seiner Bewegung auf der Kreisbahn um die Bohrachse durch die Drehung der Exzenteraufnahme um die Bohrachse, erfolgt vorzugsweise kein axialer Vorschub des Exzenters.

Sowohl zur Auslenkung des Drehlagers für den Bohrfräser als auch zur Bewegung des Drehlagers auf der Kreisbahn um die Bohrachse durch Drehung der Exzenteraufnahme um die Bohrachse an oder in dem Grundteil weist die erfindungsgemäße Vorrichtung ein gemeinsames Antriebselement auf, das um eine Antriebsachse drehbar ist, die exzentrisch zu der Drehlagerachse und zu der Bohrachse ist. Vorzugsweise ist das Antriebselement radial außerhalb des Drehlagers, des Exzenters und der Exzenteraufnahme an oder in dem Grundteil der erfindungsgemäßen Vorrichtung angeordnet derart, dass sie für einen Drehantrieb gut zugänglich ist und eine Drehung des Antriebselements nicht durch den Bohrfräser, das Drehlager, den Exzenter oder die Exzenteraufnahme behindert wird. Mit dem Antriebselement sind der Exzenter und/oder die Exzenteraufnahme drehantriebsverbunden derart, dass erfindungsgemäß durch eine Drehung des Antriebselements in einer Auslenkrichtung zuerst der Exzenter im Sinne einer Auslenkung um die Exzenterachse und bei weiterer Drehung des Antriebselements in der Auslenkrichtung die Exzenteraufnahme um die Bohrachse gedreht wird. Es wird dadurch zuerst der Exzenter in die ausgelenkte Stellung und anschließend die Exzenteraufnahme mit dem Exzenter gedreht, wobei der Exzenter in der ausgelenkten Stellung das Drehlager für den Bohrfräser auf der Kreisbahn um die Bohrachse bewegt. Vorzugsweise wird bei einem Drehantrieb des Antriebselements in einer der Auslenkrichtung entgegengesetzten Rückstellrichtung die Auslenkung des Drehlagers durch eine Rückdrehung des Exzenters in der Exzenteraufnahme verkleinert und vorzugsweise in die nicht ausgelenkte Bohrstellung verbracht, in der die Drehlagerachse mit der Bohrachse fluchtet.

Vorteil der Erfindung ist, dass die Auslenkung des Bohrfräsers und die anschließende Bewegung des Bohrfräsers auf der Kreisbahn durch einen fortgesetzten Drehantrieb des Antriebselements in der Auslenkrichtung erfolgt. Insbesondere ist die erfindungsgemäße Vorrichtung für einen schnellen Einsatz auf einer Baustelle geeignet, da die Vorrichtung äußerst kompakt ausgestaltet ist.

Eine Ausgestaltung der Erfindung sieht vor, dass das Grundteil einen ebenen Fuß oder mehrere Füße in einer Ebene zur Anlage und Festlegung an dem Ankergrund oder dergleichen, in dem das Bohrloch mit der Hinterschneidung hergestellt werden soll, aufweist. Die Ebene, in der sich der Fuß oder die Füße des Grundteils befinden, ist insbesondere senkrecht zu den Achsen der Vorrichtung. Die Festlegung des Grundteils an dem Ankergrund kann beispielsweise durch manuelles Halten an und Drücken gegen den Ankergrund, mit Saugfüßen oder dergleichen, Festspannen an oder Verschrauben mit dem Ankergrund erfolgen. Die Aufzählung ist beispielhaft und nicht abschließend.

Eine Ausgestaltung der Erfindung sieht ein Handantriebselement als Antriebselement zu dem aufeinanderfolgenden Drehantrieb zuerst des Exzenters und anschließend der Exzenteraufnahme von Hand vor. Das Handantriebselement kann abnehmbar sein, um zu einem maschinellen Antrieb beispielsweise einen Akkuschrauber oder eine Bohrmaschine ansetzen zu können und das Antriebselement damit drehend anzutreiben.

Vorzugsweise führt das Drehlager den Bohrfräser axial zur Drehlagerachse verschieblich, um das Bohrloch durch Vorschub des Bohrfräsers axial zur Drehlagerachse bei gleichzeitigem Drehantrieb der Bohrfräsers um die Drehlagerachse herstellen zu können, bevor durch Auslenkung und Bewegung des Bohrfräsers auf der Kreisbahn der Hinterschnitt im Bohrloch hergestellt wird. Nach einer Rückstellung des Drehlagers und mit ihm des Bohrfräsers in die nicht-ausgelenkte Bohrstellung lässt sich der Bohrfräser vorzugsweise so weit zurückziehen, dass der Bohrfräser nicht über die Ebene übersteht, in der sich der Fuß oder die Füße, mit denen das Grundteil beim Bohren des Bohrlochs und beim Fräsen der Hinterschneidung am Ankergrund oder dergleichen anliegt, übersteht. In der zurückgezogenen Stellung befindet sich der Bohrfräser also vollständig auf der Seite der Ebene des Fußes oder der Füße des Grundteils, auf der sich alle Teile der Vorrichtung oder jedenfalls das Grundteil, die Exzenteraufnahme, der Exzenter und das Drehlager befinden. In der zurückgezogenen Stellung lässt sich das Grundteil mit seinem Fuß oder seinen Füßen an dem Ankergrund anliegend anordnen, ohne dass der Bohrfräser störend über- beziehungsweise vorsteht.

Vorzugsweise weist die erfindungsgemäße Vorrichtung eine Drehwinkelbegrenzung für den Exzenter an oder in der Exzenteraufnahme auf, die die Drehung des Exzenters in Bezug auf die Exzenteraufnahme in der Auslenkrichtung auf eine maximale Auslenkung und vorzugsweise in der entgegengesetzten Rückstellrichtung auf die Bohrstellung begrenzt, in der die Drehlagerachse des Drehlagers mit der Bohrachse fluchtet. Der Drehwinkel kann beispielsweise auf 180° begrenzt sein derart, dass sich der Exzenter um 180° an oder in der Exzenteraufnahme drehen lässt, wobei das Drehlager eine Bewegung auf einem Halbkreisbogen um die Exzenterachse vollführt. Die maximale Auslenkung ist in diesem Fall das Doppelte des Abstandes der Drehlagerachse von der Exzenterachse. Der Abstand der Exzenterachse von der Bohrachse ist vorzugsweise gleich groß wie der Abstand der Drehlagerachse von der Exzenterachse damit sich das Drehlager in die nicht-ausgelenkte Bohrstellung verbringen lässt, in der die Drehlagerachse mit der Bohrachse fluchtet.

Eine Ausgestaltung der Erfindung sieht vor, dass der Exzenter durch einen Zugmitteltrieb mit dem Antriebselement drehantriebsverbunden ist. Der Zugmitteltrieb weist beispielsweise ein Seil, ein Band, einen Riemen, eine Kette oder dergleichen Zugmittel auf.

Die Rückstellung in der der Auslenkung entgegengesetzten Rückstellrichtung kann mit demselben Zugmitteltrieb erfolgen, wenn beispielsweise ein endloses, umlaufendes Zugmittel verwendet wird. Eine Ausgestaltung der Erfindung sieht getrennte Zugmittel oder Zugmitteltriebe für die Auslenkung und die Rückstellung vor. In diesem Fall ist das Zugmittel beispielsweise an einem Umfang des Antriebselements und an einem Umfang des Exzenters angeordnet derart, dass durch eine Drehung des Antriebselements ein Zug auf das Zugmittel ausgeübt wird, das wiederum ein Drehmoment auf de n Exzenter ausübt. Getrennte Zugmitteltriebe für die Auslenkung und die Rückstellung ermöglichen einen einfachen Ausgleich einer Änderung eines Abstands des Exzenters von dem Antriebselement bei der Drehung des Exzenters oder der Exzenteraufnahme durch Zugmittel, die so lang sind, dass sie nur bei einem maximalen Abstand des Exzenters vom Antriebselement gespannt oder selbst dann noch lose sind.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels aufweisen, sind möglich.

Die Erfindung wird nachfolgend anhand eines in der Zeichnung dargestellten Ausführungsbeispiels näher erläutert. Die Zeichnung ist eine schematisierte und vereinfachte Darstellung zum Verständnis und zur Erläuterung der Erfindung. Es zeigen:
- Figur 1: eine Ansicht einer Vorrichtung zur Führung und Auslenkung eines Bohrfräsers zur Herstellung eines hinterschnittenen Bohrlochs gemäß der Erfindung in einer Bohrstellung von oben;
- Figur 2: die Vorrichtung aus Figur 1 in einer teilweise ausgelenkten Stellung;
- Figur 3: die Vorrichtung aus Figuren 1 und 2 in einer maximal ausgelenkten Stellung;
- Figur 4: eine Seitenansicht der Vorrichtung aus Figuren 1 bis 3 in der Figur 1 entsprechenden, nicht-ausgelenkten Bohrstellung; und
- Figur 5: einen Achsschnitt der Vorrichtung aus Figuren 1 bis 4 in der Figuren 1 und 4 entsprechenden, nicht-ausgelenkten Bohrstellung.

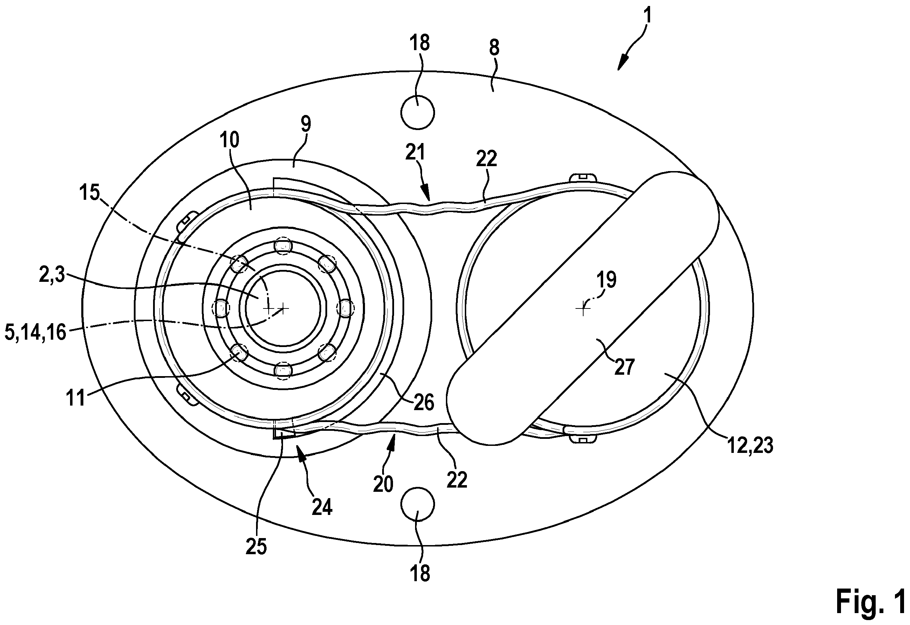

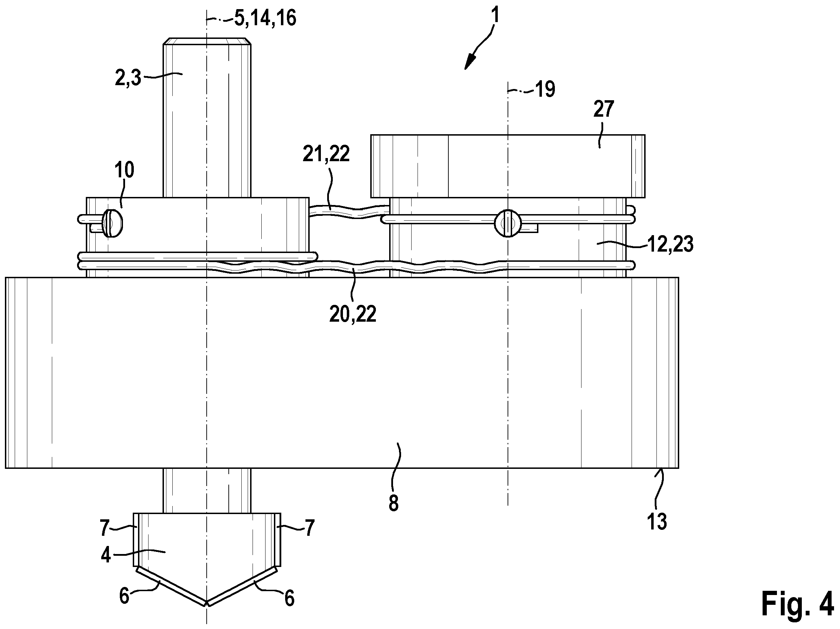

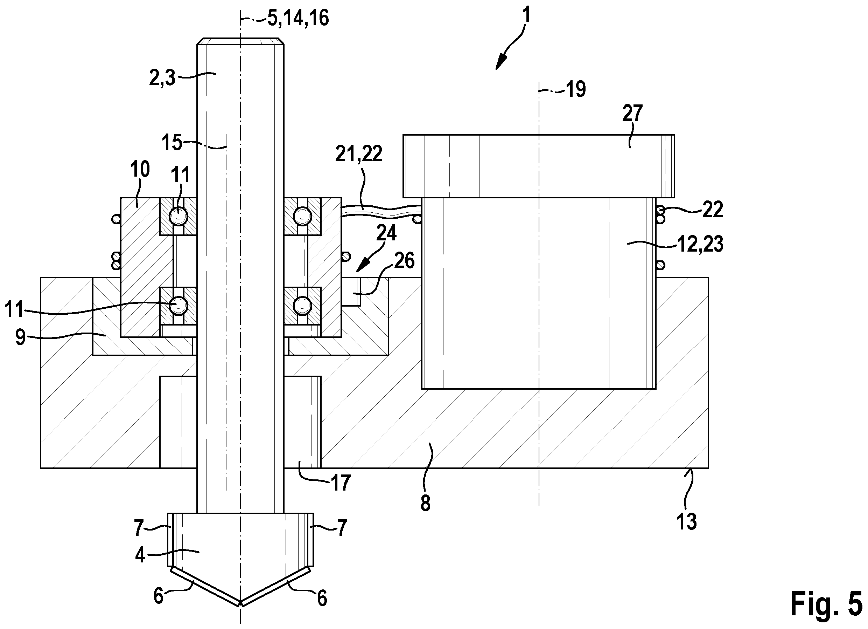

Die Zeichnung zeigt eine erfindungsgemäße Vorrichtung 1 zur Führung und Auslenkung eines Bohrfräsers 2 zur Herstellung eines nicht dargestellten, hinterschnittenen Bohrlochs in einem ebenfalls nicht dargestellten Ankergrund. Dabei zeigen die Figuren 1 bis 3 die Vorrichtung 1 von oben, das heißt axial zu ihren verschiedenen, noch zu erläuternden Drehachsen und axial zu einem Bohrfräserschaft 3; die Figur 4 die Vorrichtung 1 von einer Seite, das heißt radial zu den Drehachsen und radial zum Bohrfräserschaft 3; und Figur 5 einen Achsschnitt der Vorrichtung 1.

Der Bohrfräser 2 weist einen Bohrfräserschaft 3 mit einem Bohrfräskopf 4 an einem Ende des Bohrfräserschafts 3 auf. Der Bohrfräserschaft 3 ist im Ausführungsbeispiel eine zylindrische Stange, deren Längsachse hier als Bohrfräserachse 5 bezeichnet wird. Der Bohrfräskopf 4 weist schräg zu Radialen in einer oder in mehreren Axialebenen angeordnete Bohrschneiden 6 an einem vorderen Ende, wie von Bohrern bekannt, und an einem Umfang angeordnete Frässchneiden 7, wie von Fräsern bekannt, auf. Im Ausführungsbeispiel sind die Frässchneiden 7 achsparallel angeordnet, sie können allerdings auch schräg in einem Winkel zur Bohrfräserachse 5 angeordnet sein (nicht dargestellt). Im Ausführungsbeispiel bestehen die Bohrschneiden 6 und die Frässchneiden 7 aus Hartmetall. Andere, beispielsweise auch mit dem Bohrfräskopf 4 einstückige Bohrschneiden 6 und/oder Frässchneiden 7 sind möglich (nicht dargestellt).

Zur Herstellung des nicht dargestellten Bohrlochs wird der Bohrfräser 2 um die Bohrfräserachse 5 drehend angetrieben und axial vorgeschoben, das heißt mit dem Bohrfräskopf 4 voraus axial zur Bohrfräserachse 5 bewegt. Zur Herstellung der Hinterschneidung in dem Bohrloch wird der Bohrfräser 2 weiterhin um die Bohrfräserachse 5 drehend angetrieben, dabei ausgelenkt und der ausgelenkte Bohrfräser auf einer Kreisbahn um eine Bohrachse 14 bewegt. Die Bohrachse 14 ist die Achse des zuvor gebohrten Bohrlochs, die beim Bohren mit nicht-ausgelenktem Bohrfräser 2 mit der Bohrfräserachse 5 fluchtet. "Auslenkung" bedeutet eine Bewegung des Bohrfräsers 2 radial zur Bohrfräserachse 5 beziehungsweise zur Bohrachse 14, wobei die Bewegung gerade, das heißt auf einer Radialen zur Bohrfräserachse 5 und zur Bohrachse 14 und grundsätzlich auf einer beliebigen, beispielsweise bogenförmigen, Bahn erfolgen kann. Die Bewegung auf der Kreisbahn um die Bohrachse 14 zur Herstellung der Hinterschneidung im Bohrloch kann während der Auslenkung beginnen oder erst bei maximaler Auslenkung beginnen. Für eine in Umfangsrichtung vollständige Hinterschneidung ist eine Bewegung des Bohrfräsers 2 mit maximal ausgelenktem Bohrfräser 2 auf einer vollständigen Kreisbahn, das heißt eine Kreisbewegung des Bohrfräsers 2 bei maximaler Auslenkung um mindestens 360° notwendig.

Die erfindungsgemäße Vorrichtung 1 weist ein Grundteil 8, eine Exzenteraufnahme 9, einen Exzenter 10, ein beziehungsweise im Ausführungsbeispiel zwei fluchtende Drehlager 11 für den Bohrfräserschaft 3 und ein Antriebselement 12 auf. In der Draufsicht ist das Grundteil 8 im Ausführungsbeispiel elliptisch, kann aber auch oval sein und grundsätzlich jede beliebige Form aufweisen. Es weist eine ebene Stirnfläche auf, die zur Anlage und Festlegung an dem nicht dargestellten Ankergrund während des Herstellens des hinterschnittenen Bohrlochs vorgesehen ist, die hier als Fuß 13 des Grundteils 8 der Vorrichtung 1 bezeichnet wird und die auch als Anlagefläche oder als Auflager des Grundteils 8 beziehungsweise der Vorrichtung 1 aufgefasst werden kann. Das Antriebselement 12 ist radial außerhalb der Exzenteraufnahme 9 und des Exzenters 10 mit den Drehlagern 11 in dem Grundteil 8 angeordnet.

Zu einer Festlegung der Vorrichtung 1 an dem nicht dargestellten Ankergrund während des Herstellens des hinterschnittenen Bohrlochs weist das Grundteil 8 im Ausführungsbeispiel zwei zu dem Fuß 13 senkrechte Durchgangslöcher 18 außerhalb der Exzenteraufnahme 9 und außerhalb des Antriebselements 12 zu einer Festlegung durch Verschraubung mit beziehungsweise Festschrauben an dem Ankergrund auf. Es bestehen andere, in der Zeichnung nicht dargestellte Möglichkeiten der Festlegung der Vorrichtung 1 am Ankergrund während des Herstellens des hinterschnittenen Bohrlochs wie beispielsweise mit Vakuum oder Unterdruck mit einem oder mehreren Saugnäpfen oder Saugfüßen am Grundteil 8 oder durch Festspannen des Grundteils 8 am Ankergrund. Die Aufzählung ist beispielhaft und nicht abschließend.

Anstelle einer ebenen Fläche als Fuß 13 kann das Grundteil 8 mehrere, beispielsweise noppenartige Erhebungen in einer Ebene als Füße zur Anlage an dem Ankergrund während der Herstellung des Bohrlochs mit der Hinterschneidung aufweisen (nicht dargestellt). Vorteilhaft wegen einer statisch bestimmten Anlage am Ankergrund sind drei an den Ecken eines gedachten, regelmäßigen oder unregelmäßigen Dreiecks angeordnete solche Füße.

Die Exzenteraufnahme 9 ist zylindrisch und in einem Zylinderloch als Gleitlager in dem Grundteil 8 um eine zur Exzenteraufnahme 9 koaxialen Achse, die hier als Bohrachse 14 bezeichnet wird, drehbar gelagert.

Die Exzenteraufnahme 9 weist ein exzentrisches Zylinderloch als Gleitlager für den Exzenter 10 auf, in dem der Exzenter 10 um eine zu diesem Zylinderloch koaxiale Exzenterachse 15 drehbar gelagert ist. Aufgrund der Exzentrizität des Zylinderlochs in der Exzenteraufnahme 9 weist die Exzenterachse 15 einen radialen Abstand von der Bohrachse 14 auf und ist der Exzenter 10 durch eine Drehung der Exzenteraufnahme 9 um die Bohrachse 14 auf einer Kreisbahn, deren Radius dem radialen Abstand der Exzenterachse 15 von der Bohrachse 14 entspricht, bewegbar.

Die miteinander fluchtenden Drehlager 11 sind mit axialem Abstand voneinander exzentrisch am oder im Exzenter 10 angeordnet, wobei die Exzentrizität so groß wie die Exzentrizität des Exzenters 10 in der Exzenteraufnahme 9 ist. Dadurch weist eine Drehlagerachse 16 einen radialen Abstand von der Exzenterachse 15 auf, der so groß ist wie der radiale Abstand der Exzenterachse 15 von der Bohrachse 14. Durch eine Drehung des Exzenters 10 um die Exzenterachse 15 in der Exzenteraufnahme 9 lassen sich die Drehlager 11 und die Drehlagerachse 16 auf einer Kreisbahn, deren Radius dem Abstand der Drehlagerachse 16 von der Exzenterachse 15 entspricht, um die Exzenterachse 15 bewegen. Im Ausführungsbeispiel ist die Drehbewegung der Drehlager 11 in Bezug auf den Exzenter 10 in noch zu erläuternder Weise auf einen Halbkreisbogen von 180° begrenzt.

In einer nicht-ausgelenkten Stellung an einem Ende dieses Halbkreisbogens fluchtet die Drehlagerachse 16 mit der Bohrachse 14. Diese nicht-ausgelenkte Stellung mit fluchtender Drehlagerachse 16 und Bohrachse 14 wird hier auch als "Bohrstellung" bezeichnet werden und ist in Figuren 1, 4 und 5 gezeigt.

In einer maximal ausgelenkten Stellung an einem anderen Ende des Halbkreisbogens, den das Drehlager 16 bei der Drehung des Exzenters 10 in der Exzenteraufnahme 9 um 180° vollführt, weist die Drehlagerachse 16 einen radialen Abstand von der Bohrachse 14 auf, der doppelt so groß wie der radiale Abstand der Exzenterachse 15 von der Bohrachse 14 ist.

Die Drehlager 11 sind im Ausführungsbeispiel Wälzlager, nämlich Kugellager, es können allerdings genauso gut andere Wälzlager, Gleitlager oder ein Drehlager 11 verwendet werden (nicht dargestellt). Zur Herstellung des hinterschnittenen Bohrlochs wird der Bohrfräserschaft 3 in den Drehlagern 11 angeordnet, wodurch der Bohrfräser 2 um die Drehlagerachse 16 drehbar ist. Dabei fluchtet die Bohrfräserachse 5 mit der Drehlagerachse 16. Außerdem führen die Drehlager 11 den Bohrfräserschaft 3 axial zur Drehlagerachse 16 und zu der mit ihr fluchtenden Bohrfräserachse 5 verschieblich, das heißt die Drehlager 11 bilden zugleich auch eine axiale Schiebeführung für den Bohrfräserschaft 3 und damit für den Bohrfräser 2.

Alle genannten Achsen, das heißt die Bohrfräserachse 5, die mit ihr fluchtende Drehlagerachse 16, die Bohrachse 14 und die Exzenterachse 15 sind parallel zueinander und senkrecht zu dem Fuß 13 des Grundteils 8 beziehungsweise zu der Ebene, in der sich gegebenenfalls mehrere, nicht dargestellte Füße des Grundteils 8 befinden. Der Bohrfräser 2 ist axial zur Bohrfräserachse 5 und senkrecht zum Fuß 13 beziehungsweise zu der Ebene, in der sich die Füße befinden, verschiebbar in den Drehlagern 11 geführt.

Zur Herstellung des hinterschnittenen Bohrlochs wird die Vorrichtung 1 mit dem Fuß 13 beziehungsweise den nicht dargestellten Füßen ihres Grundteils 8 an dem ebenfalls nicht dargestellten Ankergrund anliegend angeordnet und beispielsweise durch Verschrauben mit dem Ankergrund oder durch Saugnäpfe mit Unterdruck festgelegt. Dabei ist der Bohrfräser 2 axial so weit zurückgezogen, dass der Bohrfräskopf 4 nicht über den Fuß 13 des Grundteils 8 übersteht. Der Bohrfräskopf 4 befindet sich dabei in einer Aussparung 17 im Fuß 13 des Grundteils 8, die axial mindestens so tief wie der Bohrfräskopf 4 axial hoch ist.

Zur Herstellung des zunächst zylindrischen Bohrlochs wird der Bohrfräser 2 um die Bohrfräserachse 5, die mit der Drehlagerachse 16 fluchtet, drehend angetrieben und axial vorgeschoben, das heißt der Bohrfräskopf 4 wird axial zur Bohrfräserachse 5 in den nicht dargestellten Ankergrund bewegt und dabei drehend angetrieben. Das entspricht einer üblichen Herstellung eines Bohrlochs durch Bohren. Möglich ist auch ein Schlagbohren mit impulsartiger, axialer Schlagbeaufschlagung des Bohrfräsers 2. Die Vorrichtung 1 befindet sich beim Bohren des zunächst zylindrischen Bohrlochs in der nicht-ausgelenkten Bohrstellung, in der die Bohrfräserachse 5 und die mit ihr fluchtende Drehlagerachse 16 mit der Bohrachse 14 fluchten. Die Bohrachse 14 ist also eine Achse der Vorrichtung 1, zu der das Bohrloch gleichachsig beziehungsweise fluchtend gebohrt wird, wenn das Bohrloch - wie vorgesehen - in der nicht-ausgelenkten Bohrstellung gebohrt wird. Figuren 1, 4 und 5 zeigen die Vorrichtung 1 in der nicht-ausgelenkten Bohrstellung.

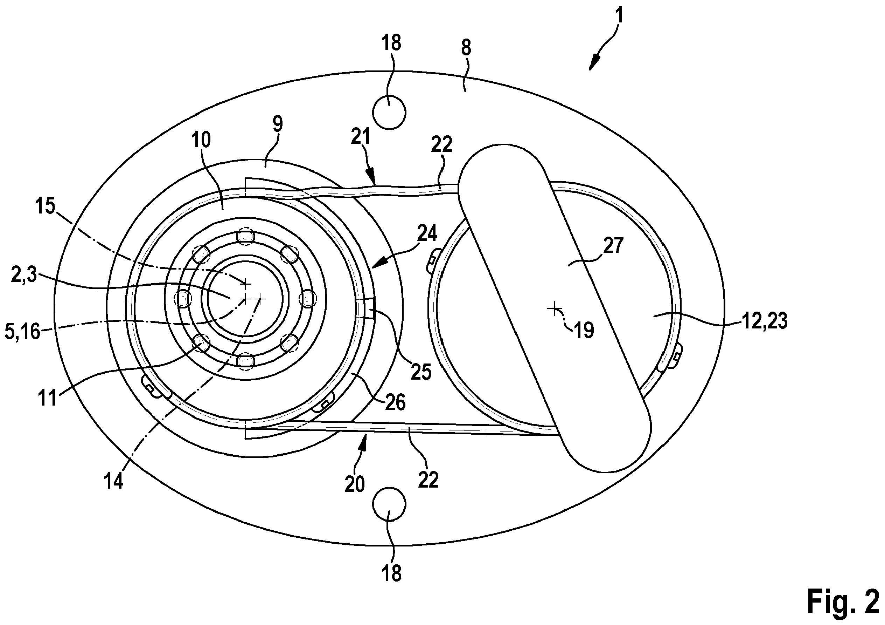

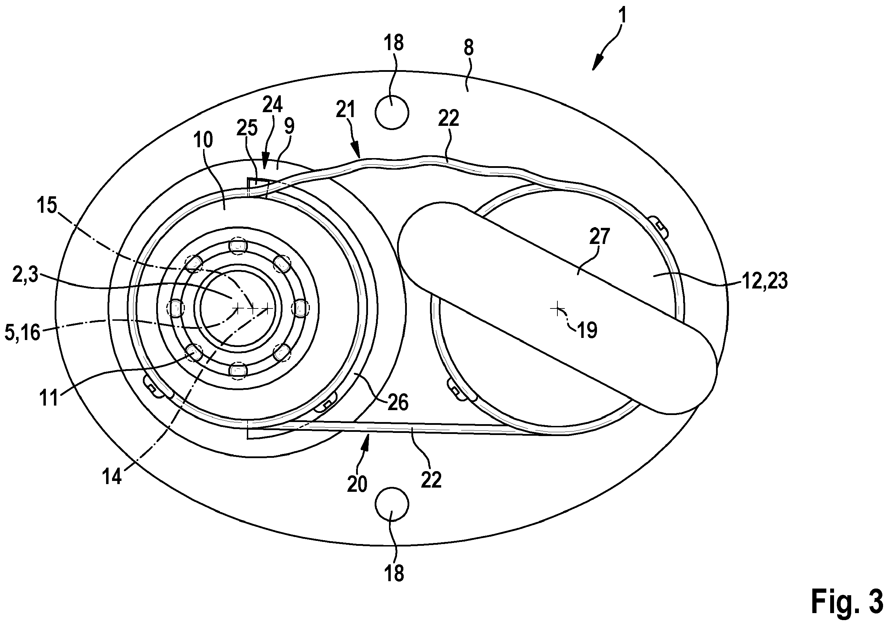

Zur Herstellung der Hinterschneidung in dem Bohrloch wird der Bohrfräser 2 radial ausgelenkt, indem der Exzenter 10 um 180° in der Exzenteraufnahme 9 um die Exzenterachse 15 gedreht wird. Bei dieser 180° Drehung des Exzenters 10 um die Exzenterachse 15 wird das Drehlager 11 mit dem Bohrfräser 2 auf einem Halbkreisbogen, dessen Radius so groß wie der Abstand der Drehlagerachse 16 von der Exzenterachse 15 ist, um die Exzenterachse 15 bewegt. Die maximale Auslenkung ist folglich doppelt so groß wie der Abstand der Drehlagerachse 16 von der Exzenterachse 15. Figur 3 zeigt die Vorrichtung 1 mit maximaler Auslenkung. Figur 2 zeigt eine mittlere Auslenkung des Bohrfräsers 2 nach einer Drehung des Exzenters 10 um 90°. Die maximale Auslenkung darf nicht größer sein als ein radialer Abstand der Frässchneiden 7 vom Bohrfräserschaft 3 (nicht von der Bohrfräserachse 5! Deren radialer Abstand von den Frässchneiden 7 ist um einen halben Durchmesser des Bohrfräserschafts 3 größer), weil sonst der Bohrfräserschaft 3 bei der Auslenkung des Bohrfräsers 2 gegen eine Lochwand des zylindrischen Bohrlochs stößt.

Während der Auslenkung wird der Bohrfräser 2 um die Bohrfräserachse 5 drehend angetrieben, wodurch die Frässchneiden 7 die Hinterschneidung in dem Bohrloch erstellen. Während der Auslenkung, oder wenn der Bohrfräser 2 maximal ausgelenkt ist, wird das Drehlager 11 mit dem Bohrfräser 2 durch Drehung der Exzenteraufnahme 9 im Grundteil 8 um die Bohrachse 14 auf einer Kreisbahn um die Bohrachse 14 bewegt. Die Drehung beträgt mindestens 360° mit maximal ausgelenktem Bohrfräser 2, um eine vollständige Hinterschneidung über 360° im Bohrloch herzustellen. Während der Herstellung der Hinterschneidung wird der Bohrfräser 2 um die Bohrfräserachse 5, die mit der Drehlagerachse 16 fluchtet, drehend angetrieben.

Die Auslenkung des Bohrfräsers 2 erfolgt manuell durch Drehung des Antriebselements 12 um seine Achse, die hier als Antriebsachse 19 bezeichnet wird und die ebenfalls parallel zu den anderen Achsen 5, 14, 15, 16 verläuft. Das Antriebselement 12 ist im Ausführungsbeispiel als Handantriebselement mit einem Handgriff 27 ausgebildet. Wahlweise ist beispielsweise auch ein Sterngriff möglich (nicht dargestellt). Das Antriebselement 12 ist über zwei Zugmitteltriebe 20, 21 mit dem Exzenter 10 drehantriebsverbunden. "Drehantriebsverbunden" bedeutet, dass durch Drehung des Antriebselements 12 der Exzenter 10 gedreht werden kann. Die Zugmitteltriebe 20, 21 wirken gegenläufig, ein erster Zugmitteltrieb 20 bewirkt die Auslenkung und ein zweiter Zugmitteltrieb 21 eine Rückstellung in die nicht-ausgelenkte Bohrstellung.

Beide Zugmitteltriebe 20, 21 weisen biegeschlaffe und zugfeste Zugmittel 22 wie beispielsweise Seile, Riemen, Bänder oder Ketten, im Ausführungsbeispiel Stahlseile, auf, die entgegengesetzt auf einen Umfang des Exzenters 10, der zu diesem Zweck axial auf einer dem Fuß 13 gegenüberliegenden Stirnseite aus dem Grundteil 8 vorsteht, und auf eine Zugmittelrolle 23 des Antriebselements 12 gewickelt und mit ihren Enden jeweils dort festgelegt sind. Zwischen der Zugmittelrolle 23 des Antriebselements 12 und dem Exzenter 10 verlaufen die Zugmittel 22 der beiden Zugmitteltriebe 20, 21 auf einander gegenüberliegenden Seiten, wobei mindestens eines der beiden Zugmittel 22 so weit durchhängt, dass ein Ausgleich einer Änderung eines radialen Abstands der Exzenterachse 15 von der Antriebsachse 19 des Antriebselements 12 durch eine Drehung der Exzenteraufnahme 9 um die Bohrachse 14 möglich ist. Die Zugmittel 22 müssen nicht zwingend biegeschlaff sein.

Bei einer Drehung des Antriebselements 12 in einer Auslenkrichtung wird das Zugmittel 22 eines der beiden Zugmitteltriebe 20, 21, im Ausführungsbeispiel das Zugmittel 22 des ersten Zugmitteltriebs 20, auf die Zugmittelrolle 23 des Antriebselements 12 aufgewickelt und vom Exzenter 10 abgewickelt. Dadurch versetzt das Zugmittel 22 den Exzenter 10 in eine Drehung, die von einer noch zu beschreibenden Drehwinkelbegrenzung 24 auf - im Ausführungsbeispiel 180° - begrenzt wird, was die maximale Auslenkung des Bohrfräsers 2 bedeutet. Durch die Drehung des Exzenters 10 um die 180° wird das Drehlager 11 mit dem Bohrfräser 2 auf einem Halbkreisbogen aus der nicht-ausgelenkten Bohrstellung in die maximal ausgelenkte Stellung bewegt. Bei einer Weiterdrehung des Antriebselements 12 in der Auslenkrichtung bewirkt die Drehwinkelbegrenzung 24, dass sich die Exzenteraufnahme 9 mit dem Exzenter 10 dreht, und zwar um die Bohrachse 14. Die Drehung der Exzenteraufnahme 9 um die Bohrachse 14 bewegt den Exzenter 10 zusammen mit dem Drehlager 11 und dem Bohrfräser 2 auf der Kreisbahn um die Bohrachse 14, wobei bei einem Drehantrieb des Bohrfräsers 2 um die Bohrfräserachse 5 der Bohrfräser 2 die Hinterschneidung im Bohrloch herstellt.

Nachdem die Exzenteraufnahme 9 bei maximaler Auslenkung des Bohrfräsers 2 um mindestens eine volle Umdrehung gedreht worden ist, kann der Drehantrieb des Bohrfräsers 2 beendet werden.

Das Zugmittel 20 des anderen Zugmitteltriebs 21, 20, im Ausführungsbeispiel das Zugmittel 22 des zweiten Zugmitteltriebs 21 wird bei der Drehung des Antriebselements 12 in der Auslenkrichtung von der Zugmittelrolle 23 des Antriebselements 12 abgewickelt und auf den Exzenter 10 aufgewickelt.

Nach der Herstellung des Bohrlochs und der Hinterschneidung wird der Bohrfräser 2 in die nicht-ausgelenkte Bohrstellung zurückgestellt, wozu das Antriebselement 12 in der der Auslenkrichtung entgegengesetzten Rückstellrichtung gedreht wird. Dabei wird das Zugmittel 22 des zweiten Zugmitteltriebs 21 auf die Zugmittelrolle 23 des Antriebselements 12 aufgewickelt und vom Exzenter 10 abgewickelt und das Zugmittel 22 des ersten Zugmitteltriebs 20 umgekehrt auf den Exzenter 10 aufgewickelt und von der Zugmittelrolle 23 des Antriebselements 12 abgewickelt. Dabei wird der Exzenter 10 - durch die Drehwinkelbegrenzung 24 begrenzt auf 180° - in der Exzenteraufnahme 9 bis in die nicht-ausgelenkte Bohrstellung gedreht, in der die Bohrfräserachse 5, die mit der Drehlagerachse 16 fluchtet, auch mit der Bohrachse 14 fluchtet. Der Bohrfräser 2 kann jetzt axial aus dem Bohrloch heraus bewegt werden.

Die Drehwinkelbegrenzung 24 weist eine radial von dem Exzenter 10 abstehende Nase 25 und eine halbkreisbogenförmige Nut 26 in der Exzenteraufnahme 9 auf, die den Exzenter 10 über 180° in einer Umfangsrichtung umschließt, die an ihrem Innenumfang zum Exzenter 10 hin offen ist und in die die Nase 25 ragt derart, dass ein Drehwinkel, um den sich der Exzenter 10 in der Exzenteraufnahme 9 drehen lässt, auf 180° begrenzt ist. Ausführungen der Vorrichtung 1 mit einer anderen Drehwinkelbegrenzung (nicht dargestellt) und/oder mit anderen Drehwinkeln sind möglich.

Bei dem Drehantrieb des Exzenters 10 mit dem ersten Zugmitteltrieb 20 in der Auslenkrichtung wird zunächst das Drehlager 11 mit dem Bohrfräser 2 ausgelenkt, bis die Drehwinkelbegrenzung 24 die Drehung des Exzenters 10 in der Exzenteraufnahme 9 bei der maximalen Auslenkung beendet. Bei der Weiterdrehung des Exzenters 10 in der Auslenkrichtung bewirkt die Drehwinkelbegrenzung 24, dass sich die Exzenteraufnahme 9 mit dem Exzenter 10 dreht, wobei der Exzenter 10 mit dem Drehlager 11 und dem Bohrfräser 2 auf der Kreisbahn um die Bohrachse 14 gedreht wird.

Die Rückstellung erfolgt durch entgegengesetzten Drehantrieb des Exzenters 10 mit dem zweiten Zugmitteltrieb 21, wobei zunächst der Exzenter 10 in der Exzenteraufnahme 9 dreht, bis die Drehlagerachse 16 und die mit ihr fluchtende Bohrfräserachse 5 in der nicht ausgelenkten Bohrstellung wieder mit der Bohrachse 14 fluchten. In der Bohrstellung beendet die Drehwinkelbegrenzung 24 die Drehung des Exzenters 10 in der Exzenteraufnahme 9 in der Rückstellrichtung derart, dass bei der Weiterdrehung des Exzenters 10 in der Rückstellrichtung die Exzenteraufnahme 9 mit dem Exzenter 10 mitdreht, um das Zugmittel 22 des ersten Zugmitteltriebs 20 wieder auf den Exzenter 10 aufzuwickeln um den Exzenter 10 anschließend wieder in der Auslenkrichtung drehen zu können.

Das im Ausführungsbeispiel als Handantriebselement ausgebildete Antriebselement 12 ist abnehmbar, um die Zugmittelrolle 23 beziehungsweise die beiden Zugmitteltriebe 20, 21 oder allgemein den Exzenter 10 maschinell beispielsweise mit einem Akkuschrauber antreiben zu können. Möglich ist beispielsweise auch ein Elektromotor zum Drehantrieb des Exzenters 10 (nicht dargestellt).

### Bezugszeichenliste

- 1: Vorrichtung
- 2: Bohrfräser
- 3: Bohrfräserschaft
- 4: Bohrfräskopf
- 5: Bohrfräserachse
- 6: Bohrschneide
- 7: Frässchneide
- 8: Grundteil
- 9: Exzenteraufnahme
- 10: Exzenter
- 11: Drehlager
- 12: Antriebselement
- 13: Fuß
- 14: Bohrachse
- 15: Exzenterachse
- 16: Drehlagerachse
- 17: Aussparung
- 18: Durchgangsloch
- 19: Antriebsachse
- 20: erster Zugmitteltrieb
- 21: zweiter Zugmitteltrieb
- 22: Zugmittel
- 23: Zugmittelrolle
- 24: Drehwinkelbegrenzung
- 25: Nase
- 26: Nut
- 27: Handgriff

## Patentansprüche

1. Vorrichtung (1) zur Führung und Auslenkung eines Bohrfräsers zur Herstellung eines hinterschnittenen Bohrlochs, mit einem Drehlager (11) für einen Bohrfräserschaft (3), wobei das Drehlager (11) eine Drehlagerachse (16) aufweist, das exzentrisch zu einer Exzenterachse (15) eines Exzenters (10) an oder in dem Exzenter (10) angeordnet ist, wobei der Exzenter (10) um die zu der Drehlagerachse (16) des Drehlagers (11) exzentrische Exzenterachse (15) drehbar an oder in einer Exzenteraufnahme (9) gelagert ist, die um eine zu der Exzenterachse (15) exzentrische Bohrachse (14) drehbar an oder in einem Grundteil (8) der Vorrichtung (1) gelagert ist, und mit einem Antriebselement (12), das um eine Antriebsachse (19) drehbar ist, **dadurch gekennzeichnet, dass** die Antriebsachse (19) exzentrisch zu der Drehlagerachse (16) ist, und dass das Antriebselement (12) mit dem Exzenter (10) und/oder mit der Exzenteraufnahme (9) drehantriebsverbunden ist, derart, dass durch eine Drehung des Antriebselements (12) in einer Auslenkrichtung zuerst der Exzenter (10) um die Exzenterachse (15) und bei einer weiteren Drehung des Antriebselements (12) die Exzenteraufnahme (9) um die Bohrachse (14) drehbar ist.

2. Vorrichtung (1) nach Anspruch 1, **dadurch gekennzeichnet, dass** das Grundteil (8) einen ebenen Fuß (13) oder Füße in einer Ebene zur Anlage und Festlegung an einem Ankergrund aufweist.

3. Vorrichtung (1) nach Anspruch 1 oder 2, **dadurch gekennzeichnet, dass** die Vorrichtung (1) ein Handantriebselement als Antriebselement (12) aufweist.

4. Vorrichtung (1) nach 2 oder 3, **dadurch gekennzeichnet, dass** das Drehlager (11) den Bohrfräser (2) axial verschieblich führt und der Bohrfräser (2) in dem Drehlager (11) so weit axial zurückziehbar ist, dass er nicht über die Ebene, in der sich der Fuß (13) oder die Füße des Grundteils (8) der Vorrichtung (1) befindet/n, übersteht.

5. Vorrichtung (1) nach Anspruch 1, **dadurch gekennzeichnet, dass** in einer Bohrstellung des Exzenters (10) an oder in der Exzenteraufnahme (9) die Drehlagerachse (16) und die Bohrachse (14) fluchten.

6. Vorrichtung (1) nach einem oder mehreren der vorhergehenden Ansprüche, **dadurch gekennzeichnet, dass** der Exzenter (10) und die Exzenteraufnahme (9) eine Drehwinkelbegrenzung (24) aufweisen, die eine Drehung des Exzenters (10) in Bezug auf die Exzenteraufnahme (9) in einer Auslenkdrehrichtung auf eine maximale Auslenkung und in einer entgegengesetzten Rückstellrichtung auf die Bohrstellung begrenzen.

7. Vorrichtung (1) nach einem oder mehreren der vorhergehenden Ansprüche, **dadurch gekennzeichnet, dass** der Exzenter (10) durch einen Zugmitteltrieb (20, 21) mit dem Antriebselement (12) drehantriebsverbunden ist.

8. Vorrichtung (1) nach Anspruch 7, **dadurch gekennzeichnet, dass** die Vorrichtung (1) einen ersten Zugmitteltrieb (20) für die Auslenkung und einen zweiten Zugmitteltrieb (21) für die Rückstellung aufweist.

9. Vorrichtung (1) nach einem oder mehreren der vorhergehenden Ansprüche, **dadurch gekennzeichnet, dass** die Drehlagerachse (16), die Exzenterachse (15), die Bohrachse (14) und/oder die Antriebsachse (19) parallel zueinander sind.

10. Vorrichtung (1) nach einem oder mehreren der vorhergehenden Ansprüche, **dadurch gekennzeichnet, dass** bei einem Drehantrieb des Exzenters (10) zuerst der Exzenter (10) in der Exzenteraufnahme (9) dreht und nach einem begrenzten Drehwinkel des Exzenters (10) in der Exzenteraufnahme (9) die Exzenteraufnahme (9) mit dem Exzenter (10) mitdreht.
